# EUROPÄISCHE PATENTANMELDUNG

(11) **EP 2 523 335 A1**
(43) Veröffentlichungstag der Anmeldung: **14.11.2012**
(21) Anmeldenummer: 11165630.2
(22) Anmeldetag: 11.05.2011
(51) Int. Cl.: H02M 5/458, H02M 7/797

(54) **Gleichrichterschaltungsanordnung, Frequenzumrichter und Verfahren zu deren Betrieb**

(71) Anmelder: SIEMENS AKTIENGESELLSCHAFT, 80333 München (DE)
(72) Erfinder: Benesch, Norbert, 90562, Heroldsberg (DE); Dillig, Reinhold, 96117, Memmelsdorf (DE); Herrmann, Bernd, 91074, Herzogenaurach (DE); Lorz, Roland, 91341, Röttenbach (DE); Roppelt, Bernd, 96191, Viereth-Trunstadt (DE); Schierling, Hubert, 91052, Erlangen (DE); Schwinn, Thomas, 91074, Herzogenaurach (DE)

(57) **Zusammenfassung**

Bei einem Gleichrichter kann im Falle eines Kurzschlusses in einem Verbraucher, der an Gleichspannungs-Anschlüsse (ZK+) des Gleichrichters angeschlossen ist, ein Kurzschlussstrom mit einer derart großen Stromstärke durch den Gleichrichter fließen, dass dessen Komponenten durch Überhitzung beschädigt werden. Es ist Aufgabe der vorliegenden Erfindung, für eine Gleichrichterschaltungsanordnung einen Schutz gegen eine Beschädigung durch einen Überstrom bereitzustellen. Die erfindungsgemäße Lösung soll insbesondere auch für einen Frequenzumrichter verwendbar sein. Bei der erfindungsgemäßen Gleichrichterschaltungsanordnung sind ein Wechselspannungs-Anschluss (R,S,T) und ein Gleichspannungs-Anschluss (ZK+) über ein Diodenelement (210,214,218) und ein Transistorelement (212,216,220) gekoppelt, und zwar derart, dass ein zwischen den beiden Anschlüssen (R,S,T, ZK+) fließender Strom sowohl durch das Diodenelement (210,214,218) als auch durch das Transistorelement (212,216,220) geführt ist. Gemäß dem erfindungsgemäßen Verfahren wird eine Stromstärke eines zwischen den beiden Anschlüssen (R,S,T, ZK+) fließenden Stromes mittels des Transistorelements (212,216,220) gesteuert.

## Beschreibung

Die Erfindung betrifft eine Schaltungsanordnung zum Erzeugen einer gleichgerichteten Spannung aus einer Wechselspannung sowie einen Frequenzumrichter, der eine solche Schaltungsanordnung aufweist. Zu der Erfindung gehören auch Verfahren zum Betreiben der beiden genannten Vorrichtungen. Eine Gleichrichterschaltungsanordnung und ein Frequenzumrichter mit den jeweils genannten Merkmalen sind aus der DE 197 39 553 A1 bekannt.

Danach kann bei einem Frequenzumrichter mit einer Gleichrichterschaltungsanordnung, oder kurz einem Gleichrichter, aus der Wechselspannung eines Wechselstrom-Versorgungsnetzes (z.B. eines 230V-Netzes mit einer 50 Hz-Wechselspannungsfrequenz) durch eine Vollweggleichrichtung eine gleichgerichtete Spannung in einem Gleichspannungs-Zwischenkreis des Frequenzumrichters erzeugt werden. Bei dem Gleichrichter sind dazu Wechselspannungs-Anschlüsse jeweils über eine Halbbrücke mit einem Pluspol und mit einem Minuspol des Gleichrichters gekoppelt, die als Gleichspannungs-Anschlüsse für den Zwischenkreis dienen. Die Halbbrücken sind aus Dioden gebildet. Diese sind so verschaltet, dass ein Stromfluss von den Wechselspannungs-Anschlüssen über jeweils eine Diode zum Pluspol und (zum Bilden eines geschlossenen Stromkreises) ein Stromfluss vom Minuspol über jeweils eine weitere Diode zurück zu den Wechselspannungs-Anschlüssen ermöglicht ist.

Den Dioden des Gleichrichters können Transistoren antiparallel geschaltet sein, um elektrische Energie aus dem Zwischenkreis zurück in das Versorgungsnetz einzuspeisen. Die Transistoren sind dabei jeweils Bestandteil eines Rückflusszweiges, über welchen ein Stromfluss vom Pluspol hin zu einem der Wechselspannungs-Anschlüsse bzw. von diesen hin zum Minuspol ermöglicht werden kann.

Bei Gleichrichtern dieser Art ergibt sich das Problem, dass bei einem Kurzschluss in einem Verbraucher, wenn dieser an die Gleichspannungs-Anschlüsse angeschlossen ist, ein Kurzschlussstrom mit einer derart großen Stromstärke durch den Gleichrichter fließen kann, dass dessen Komponenten durch Überhitzung ebenfalls beschädigt werden. Ein Strom mit einer solchen kritischen Stromstärke wird hier als Überstrom bezeichnet.

Bei einem Frequenzumrichter kann es in ähnlicher Weise auch dann zu einer Beschädigung von dessen Gleichrichter durch einen Überstrom kommen, wenn in dessen Zwischenkreis ein Zwischenkreiskondensator zum Glätten der gleichgerichteten Spannung bereitgestellt ist. Für den Fall, dass der Zwischenkreiskondensator bei einer Inbetriebnahme des Frequenzumrichters ungeladen ist, fließt in dem Moment, in welchem der Gleichrichter mit dem Netz elektrisch verbunden wird, ein Aufladestrom in den Zwischenkreiskondensator, dessen Stromstärke ähnlich groß ist wie bei einem Kurzschluss.

Bei der oben genannten Druckschrift ist in einem Frequenzumrichter zum Schutz von dessen Gleichrichter im Zwischenkreis ein Halbleiter-Strombegrenzer bereitgestellt, bei welchem ein ohmscher Widerstand von der Stromstärke eines durch ihn flie-βenden Stromes abhängt. Ein Halbleiter mit einer solchen nicht linearen Strom-Spannungs-Kennlinie kann aber für bestimmte Anwendungsfälle schwierig herzustellen sein.

Es ist Aufgabe der vorliegenden Erfindung, für eine Gleichrichterschaltungsanordnung einen Schutz gegen eine Beschädigung durch einen Überstrom bereitzustellen. Der Schutz soll insbesondere auch für einen Frequenzumrichter der genannten Art verwendbar sein.

Die Aufgabe wird durch eine Schaltungsanordnung gemäß Patentanspruch 1 und ein Verfahren gemäß Patentanspruch 7 gelöst. Im Zusammenhang mit dem Schutz für den Frequenzumrichter sind durch den Frequenzumrichter gemäß Patentanspruch 9 und das Verfahren gemäß Patentanspruch 11 weitere Lösungen gegeben. Vorteilhafte Weiterbildungen der Erfindung sind durch die Unteransprüche gegeben.

Gattungsgemäß handelt es sich bei der erfindungsgemäßen Schaltungsanordnung um einen Gleichrichter zum Erzeugen einer gleichgerichteten Spannung aus einer Wechselspannung. Ein Wechselspannungs-Anschlusselement dient zum Anschließen der Schaltungsanordnung an einen einzelnen Phasenleiter einer Wechselspannungsquelle (z.B. eines Versorgungsnetzes), ein Gleichspannungs-Anschlusselement (z.B. ein Pluspol-Anschluss oder ein Minuspol-Anschluss) zum Übertragen der gleichgerichteten Spannung an eine Versorgungsleitung eines Verbrauchers.

Bei der erfindungsgemäßen Schaltungsanordnung sind die beiden Anschlüsse (Wechselspannungs-Anschluss und Gleichspannungs-Anschluss) über ein Diodenelement und ein Transistorelement gekoppelt, und zwar derart, dass ein zwischen den Anschlüssen fließender Strom sowohl durch das Dioden- als auch durch das Transistorelement geführt ist. Im einfachsten Fall sind das Diodenelement und das Transistorelement also in Reihe geschaltet. Bei der erfindungsgemäßen Schaltungsanordnung ist es möglich, eine Stromstärke des Stromes mittels des Transistorelements zu steuern. Damit ergibt sich der Vorteil, dass ein Stromfluss durch die Schaltungsanordnung jederzeit mittels des Transistors blockiert werden kann. Zugleich verhindert das Diodenelement einen Rückfluss eines Stromes über parasitäre Dioden im Transistorelement.

Ein weiterer Vorteil ergibt sich, wenn das Transistorelement mit einem getakteten Steuersignal angesteuert wird. Dann kann der Strom nicht einfach nur geschaltet werden, also an- oder abgestellt werden, sondern es kann auch eine mittlere Stromstärke des Stromes durch die Schaltungsanordnung eingestellt werden. Das Steuersignal kann ein Spannung- oder Stromsignal sein. Eine Taktung kann z.B. mittels einer Pulsweitenmodulation oder einer Pulsfrequenzmodulation erzeugt werden.

Anstatt das Transistorelement mit einem getakteten Steuersignal anzusteuern, kann es auch als gesteuerte Stromquelle betrieben werden. Hierunter ist im Zusammenhang mit einem Bipolartransistor ein Betrieb im Verstärkungsbereich, im Zusammenhang mit einem Feldeffekttransistor (FET) ein Betrieb im Sättigungsbereich zu verstehen. Bei dem zugehörigen Steuersignal für das Transistorelement ist dann eine Amplitude einstellbar. Bei einem Betrieb als steuerbare Stromquelle ergibt sich der Vorteil, dass nicht nur eine mittlere, sondern auch eine momentane Stromstärke eines Stromes durch die Schaltungsanordnung einstellbar ist. Eine Kombination der beiden Betriebsarten des Transistorelements ergibt sich beispielsweise durch eine Pulsamplitudenmodulation des Steuersignals.

Das Diodenelement und das Transistorelement können jeweils als gesonderte elektronische Bauteile bereitgestellt sein. Diese sind dann einfach auswechselbar. Die beiden Elemente können aber auch als monolithisch integrierte Bauelemente auf einem gemeinsamen Trägersubstrat bereitgestellt sein. Dadurch werden parasitäre Induktivitäten verhindert, ein verhältnismäßig geringer Durchgangswiderstand erreicht, die Kühlung der Halbleiterschichten vereinfacht und im Vergleich zu einer Lösung mit einzeln bereitgestellten Bauelementen die Herstellungskosten verringert. Das Trägersubstrat umfasst bevorzugt eine Keramik oder ein Insulated-Metal-Substrate (IMS). Die beiden Elemente können auch in ein Leistungsmodul integriert sein. Es ist auch möglich, ein einziges Halbleiter-Schaltungselement zu erzeugen, bei dem Halbleiterschichten derart dotiert sind, dass durch das Halbleiter-Schaltungselement sowohl das Transistorelement als auch das Diodenelement bereitgestellt ist.

Im Zusammenhang mit einer Gleichrichtung von mehreren Spannungen eines mehrphasigen Wechselspannungs-Versorgungsnetzes (z.B. eines Drehstrom-Netzes) weist eine Weiterbildung der erfindungsgemäßen Schaltungsanordnung zumindest ein weiteres Wechselspannungs-Anschlusselement der genannten Art auf, das über ein weiteres Diodenelement und über das bereits erwähnte Transistorelement mit dem Gleichspannungsanschluss gekoppelt ist. Ein zwischen dem weiteren Wechselspannungs-Anschlusselement und dem Gleichspannungs-Anschlusselement fließender Strom ist dann sowohl durch das weitere Dioden- als auch durch das Transistorelement geführt. Bei dieser Weiterbildung ist also das Transistorelement für zwei oder mehr Wechselspannungsanschlüsse genutzt.

In gleicher Weise kann auch ein Diodenelement für zwei oder mehr Wechselspannungsanschlüsse genutzt sein. Gemäß einer diesbezüglichen Weiterbildung der erfindungsgemäßen Schaltungsanordnung weist diese zumindest ein weiteres Wechselspannungs-Anschlusselement der genannten Art auf, das über ein weiteres Transistorelement und über das Diodenelement mit dem Gleichspannungsanschluss derart gekoppelt ist, dass ein zwischen dem weiteren Wechselspannungs-Anschlusselement und dem Gleichspannungs-Anschlusselement fließender Strom sowohl durch das Dioden- als auch durch das weitere Transistorelement geführt ist.

Diese Weiterbildungen weisen den Vorteil auf, dass ein Gleichrichter bereitgestellt werden kann, der eine gleichgerichtete Spannung aus Wechselspannungen eines mehrphasigen Versorgungsnetzes erzeugen kann, ohne dass für jede Phase sowohl ein eigenes Transistorelement als auch ein eigenes Diodenelement bereitgestellt sein muss. Dies ermöglicht eine kostengünstige Herstellung des Gleichrichters.

Das Diodenelement und das Transistorelement, über welche der Gleichspannungs-Anschluss mit einem bestimmten Wechselspannungs-Anschluss gekoppelt ist, erlauben einen Stromfluss zwischen diesen beiden Anschlüssen nur in eine Richtung. Bei einer diesbezüglichen vorteilhaften Weiterbildung der erfindungsgemäßen Schaltungsanordnung ist ein erster Rückflusszweig vorgesehen, durch welchen das Diodenelement und das Transistorelement überbrückt sind. Dann ist auch eine Übertragung von elektrischer Energie von der Gleichstromseite hin zur Wechselstromseite ermöglicht. Der entsprechende Strom ist dabei in dem Rückflusszweig durch ein Rückfluss-Diodenelement und/oder ein Rückfluss-Transistorelement geführt.

Falls ein Strom in einem weiteren Rückflusszweig zwischen dem Gleichspannungs-Anschluss und einem weiteren Wechselspannungs-Anschluss geführt werden soll, kann dieser Strom in vorteilhafter Weise über dasselbe Rückfluss-Diodenelement oder dasselbe Rückfluss-Transistorelement wie bei dem ersten Rückflusszweig ermöglicht sein. Hierdurch wird eine kostengünstige Herstellung der Schaltungsanordnung ermöglicht.

Gemäß einem weiteren Aspekt der Erfindung kann die erfindungsgemäße Schaltungsanordnung als Gleichrichterschaltung in einem Frequenzumrichter eingebaut sein. Entsprechend umfasst die Erfindung auch einen solchen Frequenzumrichter, bei dem zum Gleichrichten einer Netz-Wechselspannung eine Ausführungsform der erfindungsgemäßen Schaltungsanordnung bereitgestellt ist. Ein solcher Frequenzumrichter weist den Vorteil auf, dass die Gleichrichtung sowohl durch eine einfache Brückengleichrichtung mittels der Dioden als auch in einem getakteten Hochsetzstellerbetrieb ermöglicht werden kann. Zusätzlich kann ein durch den Gleichrichter fließender Überstrom, wie er durch einen Kurzschluss oder einen Isolationsfehler auftreten kann, zuverlässig mittels des Transistorelements im Gleichrichter selbst unterbrochen werden.

Mittels eines Brems-Choppers, über welchen zwei Gleichspannungs-Anschlüsse der Schaltungsanordnung gekoppelt sind, lässt sich elektrische Energie in thermische Energie umwandeln. Dann kann verhindert werden, dass eine gleichgerichtete Spannung in einem Gleichspannungs-Zwischenkreis des Frequenzumrichters zu groß wird.

Um einen Aufladestrom eines Zwischenkreiskondensators eines Gleichspannungs-Zwischenkreises des Frequenzumrichters bei einer Inbetriebnahme desselben zu begrenzen, wird zumindest ein Transistorelement zunächst in einen sperrenden Zustand geschaltet, und es werden Wechselspannungsanschlüsse mit Phasenleitern eines Wechselspannungs-Versorgungsnetzes gekoppelt. Anschließend wird der Zwischenkreiskondensator mit einem Aufladestrom aufgeladen, dessen Stromstärke mittels des Transistorelements in der bereits beschriebenen Weise durch Erzeugen eines entsprechenden Steuersignals begrenzt wird.

Die Erfindung wird im Folgenden anhand von Ausführungsbeispielen näher erläutert. Dazu zeigen:
- FIG 1: eine schematische Darstellung eines Frequenzum-richters gemäß einer Ausführungsform des erfin-dungsgemäßen Frequenzumrichters,
- FIG 2: eine schematische Darstellung eines Gleichrich-termoduls des Frequenzumrichters von FIG 1,
- FIG 3: ein Diagramm mit Kennlinien zu dem Gleichrich-termodul von FIG 2,
- FIG 4: eine schematische Darstellung eines Gleichrich-termoduls eines Frequenzumrichters gemäß einer weiteren Ausführungsform des erfindungsgemäßen Frequenzumrichters,
- FIG 5: ein Diagramm mit Kennlinien zu dem Gleichrich-termodul von FIG 4,
- FIG 6 und 7: jeweils eine schematische Darstellung eines Gleichrichtermoduls eines Frequenzumrichters gemäß einer weiteren Ausführungsform des erfin-dungsgemäßen Frequenzumrichters.
- FIG 8 bis 10: jeweils eine schematische Darstellung eines Gleichrichters eines Frequenzumrichters, der jeweils einer weiteren Ausführungsform des er-findungsgemäßen Frequenzumrichters entspricht.

Die Beispiele stellen bevorzugte Ausführungsformen der Erfindung dar.

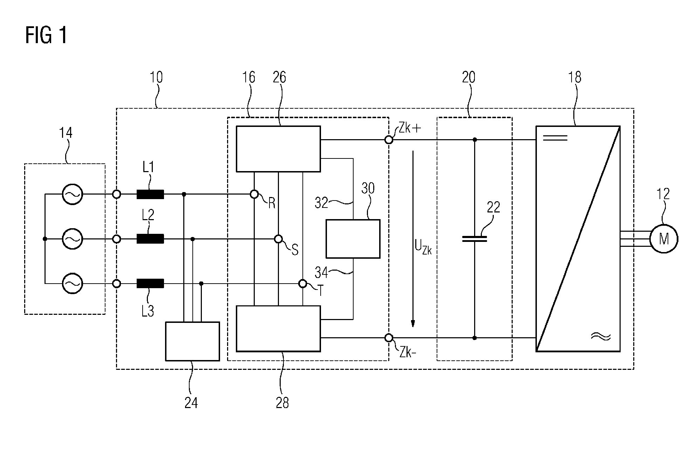

In FIG 1 ist ein Frequenzumrichter 10 gezeigt, über welchen eine elektrische Maschine 12 an ein dreiphasiges Versorgungsnetz 14 angeschlossen ist. Durch den Frequenzumrichter 10 werden Netz-Wechselspannungen mit fest vorgegebener Frequenz (z.B. 50 Hz oder 60 Hz) in eine Wechselspannung mit wählbarer Frequenz umgewandelt, mit der die elektrische Maschine betrieben wird.

Der Frequenzumrichter 10 weist dazu einen Gleichrichter 16 und einen Wechselrichter 18 auf, die über einen Gleichspannungs-Zwischenkreis 20 miteinander verschaltet sind. Der Gleichrichter 16 erzeugt aus den Netz-Wechselspannungen, die zwischen drei Wechselspannungs-Anschlüssen R, S, T anliegen, an seinem zwischenkreisseitigen Gleichspannungs-Ausgang zwischen Anschlüssen ZK+ und ZK- eine gleichgerichtete Spannung U_{ZK}. Der Anschluss ZK+ bildet den Pluspol des Gleichspannungs-Ausgangs, der Anschluss ZK- den Minuspol. Ein Verlauf der Spannung U_{ZK} wird in dem Zwischenkreis 20 durch einen Zwischenkreiskondensator 22 geglättet. Eine Kapazität des Zwischenkreiskondensators 22 kann größer als 1 mF sein. Der Wechselrichter 18 wandelt die Spannung U_{ZK} in eine mehrphasige Wechselspannung um, durch die in der elektrischen Maschine 12 ein Drehstrom erzeugt wird.

Dem Gleichrichter 16 sind netzseitig Drosseln L₁, L₂, L₃ vorgeschaltet, die verhindern, dass von dem Gleichrichter 16 erzeugte Störspannungen als Oberwellen in das Netz 14 übertragen werden. Die Drosseln L₁, L₂, L₃ dienen auch als Kommutierungsdrosseln, um den Gleichrichter 16 als Hochsetzsteller betreiben zu können.

Zwischen die Drosseln L₁, L₂, L₃ und den Gleichrichter 16 ist eine Spannungsbegrenzungsschaltung 24 geschaltet. Sie verhindert, dass von den Drosseln L₁, L₂, L₃ induzierte Spannungen an den Wechselspannungs-Anschlüssen R, S, T des Gleichrichters 16 zu einer zu großen Spannung führt, durch welche der Gleichrichter beschädigt werden könnte. Eine solch hohe Induktionsspannung kann z.B. dann induziert werden, wenn ein Stromfluss durch die Drosseln L₁, L₂, L₃ abrupt unterbrochen wird. In der Spannungsbegrenzungsschaltung 24 kann eine Begrenzung einer Spannung z.B. durch Varistoren oder durch spannungsbegrenzende Dioden ermöglicht sein. Eine aktive Begrenzung kann mithilfe von Leistungsschaltern bereitgestellt sein.

Der Gleichrichter 16 stellt eine Ausführungsform der erfindungsgemäßen Schaltungsanordnung dar. In dem Gleichrichter 16 sind die Wechselspannungs-Anschlüsse R, S, T zum einen über ein Gleichrichtermodul 26 mit dem Anschluss ZK+ und zum anderen über ein Gleichrichtermodul 28 mit dem Anschluss ZK- gekoppelt. Die Gleichrichtermodule 26, 28 können jeweils monolithisch auf einem Halbleitersubstrat integrierte Schaltungselemente aufweisen.

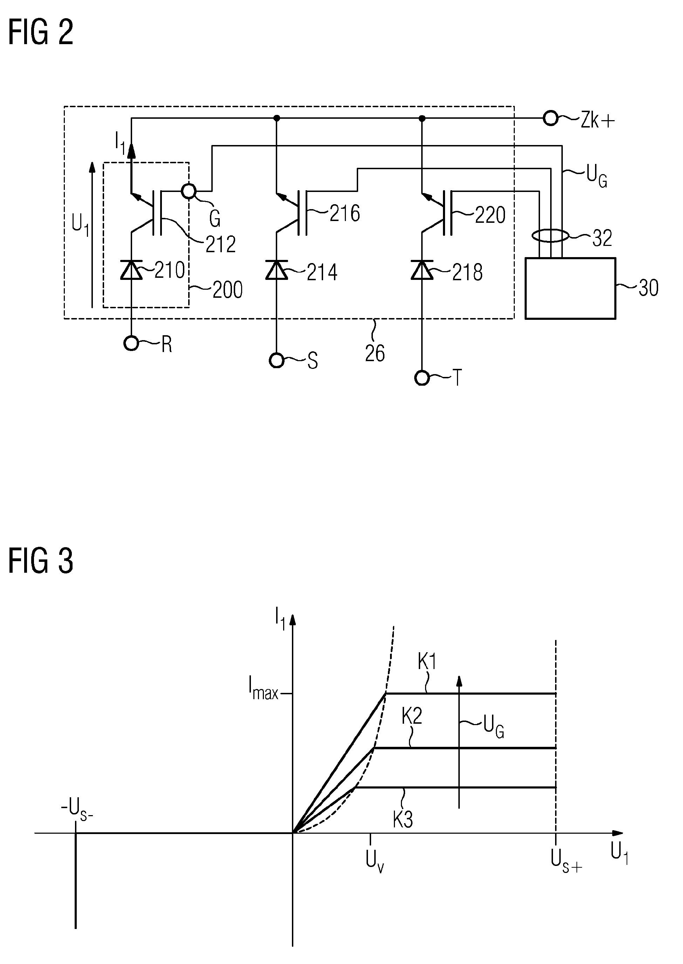

In FIG 2 ist das Gleichrichtermodul 26 mit darin befindlichen Schaltungselementen gezeigt. Der Wechselspannungs-Anschluss R ist über eine Reihenschaltung 200 aus einer Diode 210 und einem IGBT 212 (IGBT - Insulated Gate Bipolar Transistor) mit dem Anschluss ZK+ gekoppelt. In derselben Weise sind der Wechselspannungs-Anschluss S über eine Diode 214 und einen IGBT 216 mit dem Anschluss ZK+ gekoppelt, der Wechselspannungs-Anschluss T über eine Diode 218 und einen IGBT 220.

Bei dem Gleichrichter 16 erzeugt eine Steuereinrichtung 30 des Gleichrichters 16 Steuersignale, die über Steuerleitungen 32, 34 an Steuereingänge der IGBT 212, 216, 220 des Gleichrichtermoduls 26 und vergleichbarer Halbleiter-Schaltelemente des Gleichrichtermoduls 28 übertragen werden.

Im Folgenden ist anhand von FIG 2 und FIG 3 am Beispiel der Reihenschaltung 200 erläutert, wie ein von dem Wechselspannungs-Anschluss R zum Anschluss ZK+ fließender Strom I₁ einerseits von einer zwischen den beiden Anschlüssen R und ZK+ anliegenden Spannung U₁ und andererseits von einer Steuerspannung U_{G} abhängt. Die Steuerspannung S_{G} liegt dabei an einem Gate, d.h. dem Steuereingang G des IGBT 212, an. Es wird von der Steuereinrichtung 30 erzeugt und über die Steuerleitung 32 zum Steuereingang G übertragen.

In FIG 3 sind prinzipielle Verläufe von Kennlinien K1, K2, K3 gezeigt, wie sie sich für verschiedene Werte der Steuerspannung U_{G} ergeben. Für einen Wert der Spannung U₁ zwischen einem Spannungswert Uᵥ und einem Sperrspannungswert Uₛ₊ wird der IGBT 212 im Verstärkerbereich (auch aktiver Bereich genannt) betrieben, d.h. eine Stromstärke des Stromes I₁ ist nahezu unabhängig von einem genauen Wert der Spannung U₁ und lediglich über die Steuerspannung U_{G} einstellbar. Mit anderen Worten bildet die Reihenschaltung 200 für Uᵥ < U₁ < Uₛ₊ eine über den Wert von U_{G} steuerbare Stromquelle. Ein genauer Wert von Uᵥ ist (in an sich bekannter Weise) von U_{G} abhängig, wie in FIG 3 durch eine gestrichelte Verlaufslinie angedeutet ist.

Für Werte von U₁ zwischen 0 V und Uᵥ befindet sich der IGBT 212 im Sättigungsbereich. Die Reihenschaltung 200 verhält sich hier wie ein linearer ohmscher Widerstand, dessen Widerstandswert über die Steuerspannung U_{G} einstellbar ist. Der Durchlasswiderstand der Reihenschaltung kann in diesem Bereich minimiert werden.

Für Werte von U₁ kleiner als 0 V und größer als ein Sperrspannungswert -U_{S-} sperrt die Diode 210, so dass kein nennenswerter Strom durch die Reihenschaltung 200 fließt.

Wird der Sperrspannungswert U_{S+} von der Spannung U₁ überschritten oder der Sperrspannungswert -U_{S-} unterschritten, führt dies zu einem Durchbruch.

Die Kennlinien K1, K2, K3 zeigen, dass durch die Reihenschaltung 200 insgesamt ein Schaltverhalten einer steuerbaren Diode verwirklicht ist.

Die am Beispiel der Reihenschaltung 200 gezeigten Kennlinien ergeben sich entsprechend auch zwischen dem Wechselspannungs-Anschluss S und dem Anschluss ZK+ sowie zwischen dem Wechselspannungs-Anschluss R und dem Anschluss ZK+.

Durch Einstellen der Steuerspannung U_{G} und weiterer Steuerspannungen für Steuereingänge der IGBT 216 und 220 und entsprechende Schaltelemente im Gleichrichtermodul 28 kann die Steuereinrichtung 30 die Gleichrichtermodule 26, 28 beispielsweise als Hochsetzsteller betreiben. Es ist auch möglich, einen Stromfluss durch die Gleichrichtermodule 26, 28 zu blockieren. Dadurch können die Gleichrichtermodule 26, 28 vor einer Beschädigung durch einen Überstrom geschützt werden, wenn beispielsweise ein Kurzschluss im Zwischenkreis 20 vorliegt.

Zur Inbetriebnahme des Frequenzumrichters 16 werden durch Schließen eines (nicht dargestellten) Schützes die Wechselspannungs-Anschlüsse R, S, T mit dem Netz 14 elektrisch verbunden. Der Zwischenkreiskondensator 22 ist zu diesem Zeitpunkt ungeladen. Eine Stromstärke eines Aufladestroms kann von der Steuereinrichtung 30 durch Betreiben der IGBT 212, 216, 220 (und eventuell weiterer IBGT im Gleichrichtermodul 28) im Sättigungsbereich oder im Verstärkungsbereich eingestellt werden. Die Steuersignale können auch getaktet sein. In diesem Fall kann der Strom I₁ beispielsweise einen zwischen 0 A und einer maximalen Stromstärke Iₘₐₓ wechselnden Verlauf aufweisen.

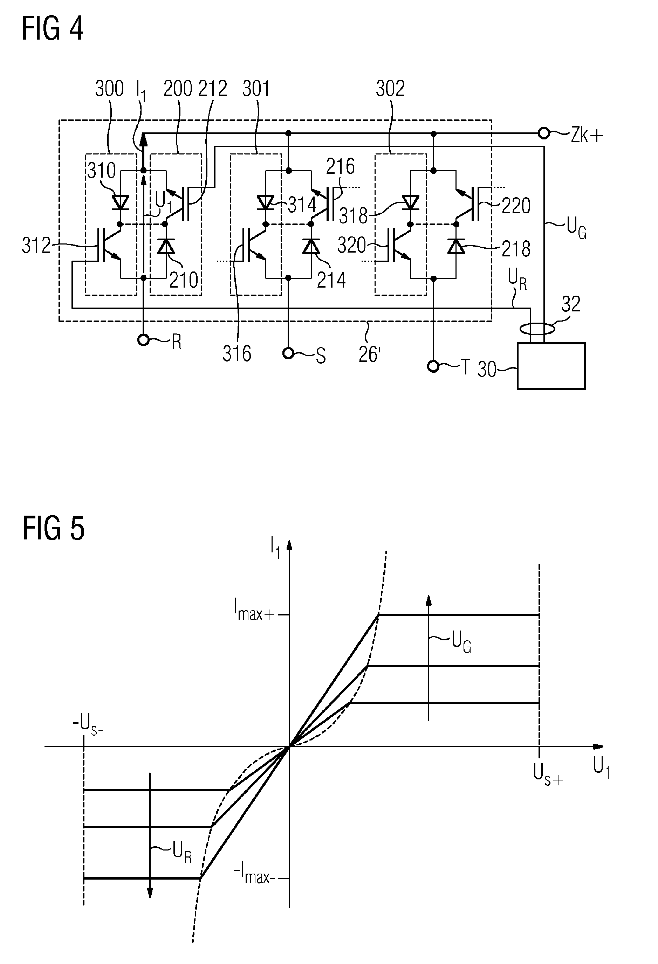

In FIG 4 ist ein weiteres Gleichrichtermodul 26' gezeigt, wie es in einem Frequenzumrichter wie dem Frequenzumrichter 16 anstelle des Gleichrichtermoduls 26 eingebaut sein kann. In FIG 4 sind Elemente, die in ihrer Funktionsweise Elementen aus FIG 2 entsprechen, mit gleichen Bezugszeichen wie in FIG 2 versehen.

Bei dem Gleichrichtermodul 26' sind ein Wechselspannungs-Anschluss R und ein Anschluss ZK+ eines Gleichspannungs-Ausgangs eines Gleichrichters, in welchem das Gleichrichtermodul 26' eingebaut ist, über eine Reihenschaltung 200 aus einer Diode 210 und einem IGBT 212 gekoppelt. Der Reihenschaltung 200 ist eine Reihenschaltung 300 aus einer Diode 310 und einem IGBT 312 parallel geschaltet. Die Reihenschaltung 300 bildet einen Rückflusszweig, durch welchen die Diode 210 und der IGBT 212 überbrückt sind. Über die Reihenschaltung 300 kann ein Stromfluss vom Anschluss ZK+ zum Anschluss R ermöglicht werden. Entsprechend stellt die Diode 310 ein Rückfluss-Diodenelement und der IGBT 312 ein Rückfluss-Transistorelement dar. Durch eine Reihenschaltung 301 aus einer Diode 314 und einem IGBT 316 ergibt sich ein Rückflusszweig für den Wechselspannungs-Anschluss S, durch eine Reihenschaltung 302 aus einer Diode 318 und einem IGBT 320 ein ebensolcher für den Wechselspannungs-Anschluss T. Innerhalb der einzelnen Reihenschaltungen können die Diode und der IGBT natürlich jeweils auch in umgekehrter Reihenfolge in Reihe geschaltet sein. Eine Verbindung der beiden zu einem Anschluss R, S, T gehörigen Reihenschaltungen mittels einer Brücke, wie sie in FIG 4 gestrichelt dargestellt sind, ist ebenfalls möglich.

Die IGBT 212 und 312 werden durch eine Steuereinrichtung 30 des Gleichrichters gesteuert. Dazu überträgt die Steuereinrichtung 30 über eine Steuerleitung 32 Steuersignale U_{G} und U_{R} an jeweilige Steuereingänge der IGBT 212, 312. Weitere Leitelemente der Steuerleitung 32, über welche die IGBT 316 und 320 sowie IGBT 216 und 220 angesteuert werden, sind in FIG 4 der Übersichtlichkeit halber durch Auslassungspunkte "..." nur angedeutet.

In FIG 5 sind prinzipielle Verläufe von Kennlinien ähnlich den in FIG 3 gezeigten Kennlinien gezeigt. Die Kennlinien in FIG 5 ergeben sich für eine zwischen den Anschlüssen R und ZK+ anliegende Spannung U₁ und für unterschiedliche Werte der Steuerspannungen U_{G} und U_{R}. Die Kennlinien zeigen den sich ergebenden Strom I₁, der zwischen dem Anschluss R und dem Anschluss ZK+ fließt. Ein Vergleich mit FIG 3 zeigt, dass durch den Rückflusszweig (Reihenschaltung 300) in einem Sperrbereich der Diode 210 (U₁ < 0 V) ein Stromfluss über die Reihenschaltung 300 hin zum Anschluss R ermöglicht ist.

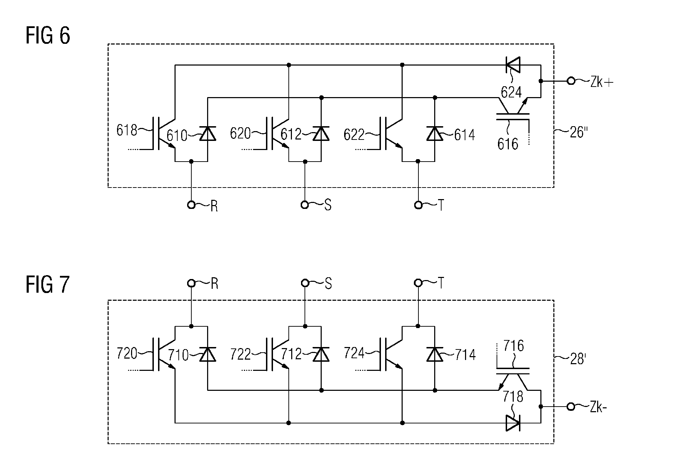

In FIG 6 ist ein Gleichrichtermodul 26" gezeigt, dass anstelle des Gleichrichtermoduls 26 oder 26' in einen Gleichrichter eingebaut sein kann. In FIG 6 sind Elemente, die Elementen in FIG 2 und FIG 4 in ihrer Funktionsweise entsprechen, mit gleichen Bezugszeichen versehen wie in den FIG 2 und 4.

Bei dem Gleichrichtermodul 26" sind Wechselspannungs-Anschlüsse R, S, T jeweils über eine Diode 610, 612, 614 und einen gemeinsamen IGBT 616 mit einem Anschluss ZK+ eines Gleichspannungs-Ausgangs des Gleichrichters gekoppelt. Rückflusszweige, durch welche die Dioden 610, 612, 614 sowie der gemeinsame IGBT 616 in Bezug auf die einzelnen Wechselspannungs-Anschlüssen R, S, T jeweils überbrückt sind, sind jeweils durch IGBT 618, 620, 622 sowie eine gemeinsame Diode 624 gebildet.

Steuerleitungen, die eine (nicht dargestellte) Steuereinrichtung, die der Steuereinrichtung 30 entspricht, mit Steuereingängen der IGBT 616, 618, 620, 622 verbinden, sind in FIG 6 der Übersichtlichkeit halber durch Auslassungspunkte lediglich angedeutet.

In FIG 7 ist ein Gleichrichtermodul 28' gezeigt, wie es anstelle des Gleichrichtermoduls 28 in einem Gleichrichter eingebaut sein kann. Bei dem Gleichrichtermodul 28' ist ein Anschluss ZK- für einen Minuspol eines Gleichspannungs-Ausgangs mit Wechselspannungs-Anschlüssen R, S, T gekoppelt. Für einen Stromfluss vom Anschluss ZK- zu den Wechselspannungs-Anschlüssen R, S, T, wie er sich im Gleichrichtbetrieb des Gleichrichters ergibt, ist der Anschluss ZK- mit den Wechselspannungs-Anschlüssen R, S, T jeweils über eine separate Diode 710, 712, 714 und einen gemeinsamen IGBT 716 gekoppelt. Rückflusszweige, wie sie zum Einspeisen von elektrischer Energie aus einem Zwischenkreis, der an den Anschluss ZK- angeschlossen ist, in ein mit den Wechselspannungs-Anschlüssen R, S, T verbundenes Wechselspannungsnetz nötig sind, umfassen eine gemeinsame Diode 718 und für jeden Wechselspannungs-Anschluss R, S, T getrennt bereitgestellte IGBT 720, 722, 724. Steuerleitungen zum Steuern der einzelnen IGBT 716, 720, 722, 724 sind in FIG 7 durch Auslassungspunkte wieder nur angedeutet.

Bei den Gleichrichtermodulen 26" und 28' ergeben sich dieselben Kennlinien wie für das Gleichrichtermodul 26', d.h. Kennlinien, wie sie in FIG 5 dargestellt sind.

Die IGBT 616 bzw. 716 stellen Halbleiter-Leistungsschalter dar, mittels welcher beim Aufladen eines Zwischenkreiskondensators die mittlere Stromstärke des Aufladestroms gesteuert werden kann. Schaltungstopologien, wie sie die Gleichrichtermodule 26" und 28' aufweisen, sind deshalb besonders gut geeignet, sowohl eine gesteuerte Aufladung als auch eine Notabschaltung zu ermöglichen. Um den Gleichrichter im Fehlerfall zu sperren, muss lediglich das Steuersignal für die Halbleiter-Leistungsschalter entsprechend vorgegeben werden.

Bei Gleichrichtermodulen, wie den Gleichrichtermodulen 26" und 28' kann auch vorgesehen sein, für die Rückflusszweige einen gemeinsamen IGBT und entsprechend für jeden Wechselspannungsanschluss separate Dioden bereitzustellen. Genauso und unabhängig von der Ausgestaltung der Rückflusszweige können auch bei den Schaltungszweigen für den Gleichrichterbetrieb separate IGBT und eine gemeinsam genutzte Diode vorgesehen sein. Die Ausgestaltung der Gleichrichtermodule ist damit sehr flexibel und erlaubt es, einen Frequenzumrichter z.B. in Bezug auf dessen Herstellungskosten, Bauvolumen und die Kühlbarkeit der Gleichrichtermodule für einzelne Anwendungsfälle zu optimieren.

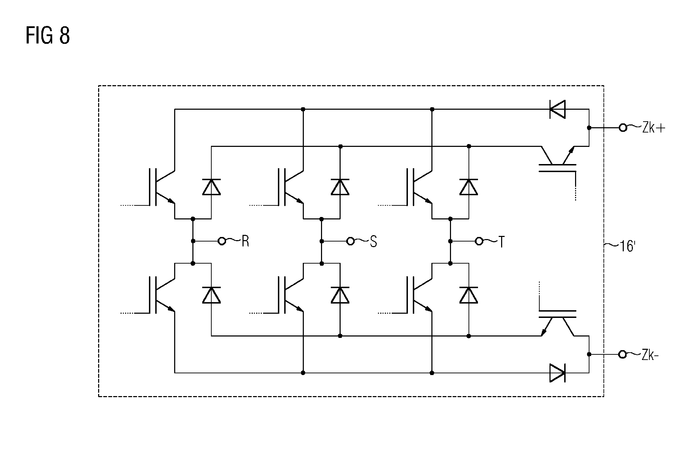

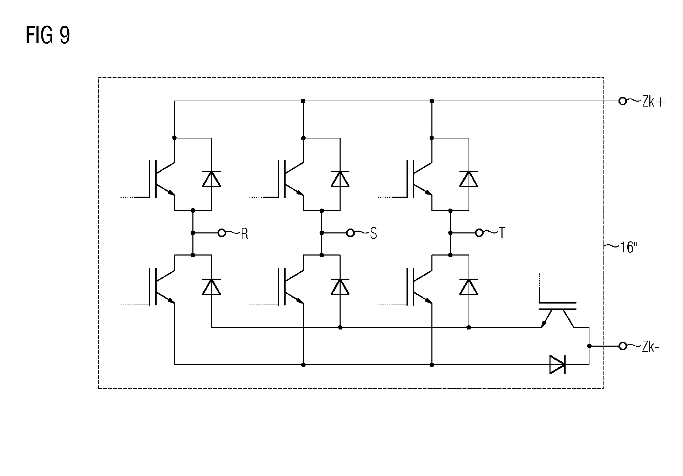

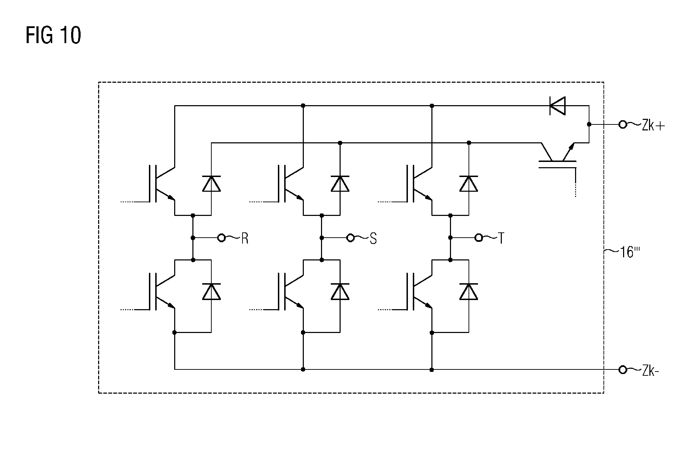

Beispielhaft sind hierzu in den FIG 8 bis 10 unterschiedliche Schaltungstopologien von Gleichrichtern 16', 16" , 16"' gezeigt, wie sie anstelle des Gleichrichters 16 durch Kombinieren der Schaltungstopologien der Gleichrichtermodule 26', 26" und 28' gebildet werden können. Die Schaltungstopologie, wie sie in FIG 8 gezeigt ist, weist den besonderen Vorteil auf, dass ein Strom durch den Gleichrichter auch für den Fall eines Erdschlusses zuverlässig unterbrochen werden kann.

Insgesamt ist durch die Beispiele gezeigt, wie durch die Erfindung eine Brückengleichrichterschaltung bereitgestellt werden kann, die folgende Funktionen erfüllt:
- eine Brückengleichrichtung von verketteten Netzspannungen für einen Gleichspannungs-Zwischenkreis und/oder einen getakteten Hochsetzstellerbetrieb für eine geregelte, vom Netz weitgehend unabhängige Zwischenkreisspannung,
- einen Vorladebetrieb zum Aufladen des Zwischenkreiskondensators mit einem in seiner Stromstärke begrenzten Aufladestrom - entweder über einen getakteten Betrieb der Brückengleichrichterschalter (in den Beispielen der IGBT) oder unter Verwendung der Brückengleichrichterschalter als aktiv betriebene Vorladewiderstände durch Betreiben im aktiven Bereich und
- eine Abschaltung des Zwischenkreises vom Einspeise-Gleichrichter bei Kurzschlüssen oder Isolationsfehlern im Gleichspannungs-Zwischenkreis sowohl bei einem Gleichrichter- als auch bei einem Wechselrichterbetrieb des Einspeise-Gleichrichters.

Im normalen Betrieb werden die Steuersignale, wie z.B. das Signal S_{G}, so vorgegeben, dass die Durchlassverluste minimiert sind. Die Gleichrichter mit Rückflusszweig wirken dabei genauso wie zwei antiseriell geschaltete Dioden mit antiparallelen Leistungsschaltern.

Im Vorladebetrieb können die Gleichrichterschalter pulsweitenmoduliert betrieben werden. Dabei wird das Puls-Pausen-Verhältnis immer weiter erhöht, um die Änderung der Spannungsdifferenz zwischen der von dem Gleichrichter erzeugbaren Spannung und der Spannung über dem Zwischenkreiskondensator derart auszugleichen, dass eine mittlere Stromstärke des Aufladestroms einen gewünschten Verlauf aufweist. Alternativ kann die Vorladung auch dadurch bewirkt werden, dass die Gleichrichterschalter im aktiven Bereich betrieben werden. Bei dem erfindungsgemäßen Frequenzumrichter ergibt sich eine platz- und resourcensparende Bauweise. Der Aufbau kann in ein Leistungsmodul integriert sein. Es ist aber auch eine Realisierung auf monolithischer Basis oder durch diskrete Bauelemente möglich. Durch die gemeinsame Nutzung eines Diodenelements oder eines Transistorelements für mehrere Phasenleiter ergibt sich eine deutliche Einsparung von Bauraum und Material.

Anstelle einer Rückspeisung von elektrischer Energie ins Netz kann eine Bremsfunktionalität bereitgestellt sein, um einen Energiefluss von einer elektrischen Maschine (im Generatorbetrieb) in den Frequenzumrichter ableiten zu können. Diese Funktionalität kann durch einen einfachen Brems-Chopper bereitgestellt sein.

## Patentansprüche

1. Schaltungsanordnung (16, 16', 16'', 16''', 26, 26', 26'', 28, 28') zum Erzeugen einer gleichgerichteten Spannung (U_{ZK}) aus einer Wechselspannung, umfassend
ein Wechselspannungs-Anschlusselement (R,S,T) zum Anschließen der Schaltungsanordnung an einen Phasenleiter einer Wechselspannungsquelle (14),
ein Gleichspannungs-Anschlusselement (ZK+, ZK-) zum Übertragen der gleichgerichteten Spannung (U_{ZK}) an eine Versorgungsleitung eines Verbrauchers (12,18), und
ein Diodenelement (210,214,218,610,612,614,710,712,714), über welches die beiden Anschlusselemente (R,S,T,ZK+, ZK-) miteinander gekoppelt sind,
**dadurch gekennzeichnet, dass** die beiden Anschlusselemente (R,S,T,ZK+, ZK-) zusätzlich über ein Transistorelement (212,216,220,616,716) derart gekoppelt sind, dass ein zwischen dem Wechselspannungs-Anschlusselement (R,S,T) und dem Gleichspannungs-Anschlusselement (ZK+, ZK-) fließender Strom sowohl durch das Dioden- als auch durch das Transistorelement geführt ist.

2. Schaltungsanordnung (16, 16', 16", 16"',26, 26', 26", 28, 28') nach Anspruch 1, **dadurchgekennzeichnet**, dass das Diodenelement (210,214,218,610,612,614, 710,712,714) und das Transistorelement (212,216,220,616,716) als monolithisch integrierte Bauelemente auf einem gemeinsamen Trägersubstrat bereitgestellt sind, wobei das Trägersubstrat bevorzugt eine Keramik oder ein Insulated-Metal-Substrate umfasst.

3. Schaltungsanordnung (26" ,28') nach Anspruch 1 oder 2, **dadurch gekennzeichnet, dass** die Schaltungsanordnung (26" ,28') zumindest ein weiteres Wechselspannungs-Anschlusselement (R,S,T) der genannten Art aufweist, das über ein weiteres Diodenelement (610,612,614, 710,712,714) und über das Transistorelement (616,716) mit dem Gleichspannungs-Anschlusselement (ZK+, ZK-) derart gekoppelt ist, dass ein zwischen dem weiteren Wechselspannungs-Anschlusselement (R,S,T) und dem Gleichspannungs-Anschlusselement (ZK+, ZK-) fließender Strom sowohl durch das weitere Dioden- (610,612,614,710,712,714) als auch durch das Transistorelement (616,716) geführt ist.

4. Schaltungsanordnung nach Anspruch 1 oder 2, **dadurch gekennzeichnet , dass** die Schaltungsanordnung zumindest ein weiteres Wechselspannungs-Anschlusselement der genannten Art aufweist, das über ein weiteres Transistorelement und über das Diodenelement mit dem Gleichspannungsanschluss derart gekoppelt ist, dass ein zwischen dem weiteren Wechselspannungs-Anschlusselement und dem Gleichspannungs-Anschlusselement fließender Strom sowohl durch das Diodenals auch durch das weitere Transistorelement geführt ist.

5. Schaltungsanordnung (26', 26", 28') nach einem der vorhergehenden Ansprüche, **gekennzeichnet durch** einen ersten Rückflusszweig (300,301,302), über welchen ein Stromfluss zwischen dem Gleichspannungs-Anschluss (ZK+, ZK-) und einem Wechselspannungs-Anschluss (R,S,T) ermöglicht ist und **durch** welchen hierbei das Diodenelement (210,214,218, 610,612,614,710,712,714) und das Transistorelement (212,216, 220,616,716), über welche diese beiden Anschlüsse (R,S,T, ZK+, ZK-) gekoppelt sind, überbrückt sind und bei welchem hierbei der Strom **durch** ein Rückfluss-Diodenelement (310, 314,318,624,718) und/oder ein Rückfluss-Transistorelement (312,316,320,618,620,622,720,722,724) geführt ist.

6. Schaltungsanordnung (26" ,28') nach Anspruch 5 in Rückbezug auf Anspruch 3 oder 4, wobei der erste Rückflusszweig (300,301,302) ein Rückfluss-Diodenelement (624,718) und ein Rückfluss-Transistorelement (618,620,622,720,722,724) aufweist, **dadurch gekennzeichnet , dass** ein Stromfluss zwischen dem Gleichspannungs-Anschluss (ZK+, ZK-) und dem zumindest einen weiteren Wechselspannungs-Anschluss (R,S,T) über dasselbe Rückfluss-Diodenelement (624, 718) oder dasselbe Rückfluss-Transistorelement wie bei dem ersten Rückflusszweig (300,301,302) ermöglicht ist.

7. Verfahren zum Betreiben einer Schaltungsanordnung gemäß einem der vorhergehenden Ansprüche, umfassend den Schritt:
- Steuern einer Stromstärke eines zwischen einem Wechselspannungs-Anschluss (R,S,T) und dem Gleichspannungs-Anschluss (ZK+, ZK-) fließenden Stromes mittels des Transistorelements (212,216,220,616,716), über welches der Strom geführt ist.

8. Verfahren nach Anspruch 7, wobei das Transistorelement (212,216,220,616,716) mit einem getakteten Steuersignal angesteuert wird und/oder das Transistorelement (212,216,220, 616,716) als gesteuerte Stromquelle betrieben wird.

9. Frequenzumrichter (10) mit einer Schaltungsanordnung nach einem der Ansprüche 1 bis 6.

10. Frequenzumrichter nach Anspruch 9, **gekennzeichnet durch** einen Brems-Chopper, über welchen zwei Gleichspannungs-Anschlüsse der Schaltungsanordnung gekoppelt sind.

11. Verfahren zum Betreiben des Frequenzumrichters (10) gemäß Anspruch 9 oder 10, bei dem zunächst zumindest ein Transistorelement (212,216,220,616,716) in einen sperrenden Zustand geschaltet wird und Wechselspannungsanschlüsse (R,S,T) mit den Phasenleitern des Wechselspannungs-Versorgungsnetzes (14) gekoppelt werden und anschließend ein Zwischenkreiskondensator (22) eines Gleichspannungs-Zwischenkreises (20) des Frequenzumrichters (10) mit einem Aufladestrom aufgeladen wird, dessen Stromstärke mittels des Transistorelements (212,216, 220,616,716) gesteuert wird.
